# EUROPÄISCHE PATENTSCHRIFT

(11) **EP 1 062 611 B1**
(45) Veröffentlichungstag und Bekanntmachung des Hinweises auf die Patenterteilung: **02.05.2003**
(21) Anmeldenummer: 99911812.8
(22) Anmeldetag: 18.03.1999
(51) Int. Cl.: G06F 17/60

(54) **INVENTARISIERUNGSSYSTEM MIT EINER DATENVERARBEITUNGS- ODER KOMMUNIKATIONSANLAGE**
INVENTORY SYSTEM COMPRISING A DATA PROCESSING OR COMMUNICATIONS SYSTEM
SYSTEME D'INVENTORIAGE COMPORTANT UN ORDINATEUR OU UN RESEAU DE TRANSMISSION

(30) Priorität: 18.03.1998 DE 19812908
(43) Veröffentlichungstag der Anmeldung: 27.12.2000
(73) Patentinhaber: BB-Data Gesellschaft für Informations- und Kommunikationssysteme mbH, 13355 Berlin (DE)
(72) Erfinder: MEY, Thorsten-Uwe, D-13597 Berlin (DE); HERRMANN, Dirk, D-12557 Berlin (DE)
(74) Vertreter: Meinke, Dabringhaus und Partner GbR, Patentanwälte
(86) Internationale Anmeldenummer: EP9901965
(87) Internationale Veröffentlichungsnummer: WO99048033

(56) Entgegenhaltungen:
- US-A- 4 636 950
- US-A- 4 688 026
- US-A- 4 691 202
- US-A- 4 850 009
- US-A- 5 218 344
- US-A- 5 434 775
- US-A- 5 682 142
- US-A- 5 883 582

## Beschreibung

Die Erfindung betrifft ein Inventarisierungssystem für Gegenstände, welche jeweils eine individuelle Inventarisierungskennung aufweisen, die von einer zentralen Stelle aus, insbesondere drahtlos, abfragbar ist, gemäß dem Oberbegriff des Anspruchs 1.

Bei derartigen Inventarisierungssystemen kommt es darauf an, das Vorhandensein und den Standort von Gegenständen, insbesondere auch Geräten und Computer- bzw. Kommunikationssystemen, zu erfassen. Es sind in diesem Zusammenhang Inventarisierungssysteme bekannt, bei denen die zu inventarisierenden Gegenstände mit einer eine telemetrisch abfragbare Kennung aufweisenden Etiketten versehen sind, die von einer in der Nähe befindlichen Station interrogierbar sind, welche durch regelmäßige Abfrage das Vorhandensein und die Art der Gegenstände überprüft und somit eine Liste der Inventarisierungskennungen der in der Nähe befindlichen Gegenstände bereithält.

Ein derartiges Inventarisierungssystem ist aus dem US-Patent 5 682 142 bekannt.

Nachteilig ist hierbei, daß einerseits spezielle Geräte als lokale Zentralen angeschafft werden müssen, deren einziger Zweck in der Abfrage und gegebenenfalls Übermittlung der abgefragten Inventarisierungskennungen an eine übergeordnete Stelle besteht. Der Ort der von der lokalen Zentrale erfaßten Gegenstände ergibt sich lediglich aus einer möglichen Individualisierung der lokalen Zentrale selbst, welche daher nicht mehr universell einsetzbar ist und auch nicht - beispielsweise in einem Reparaturfall - einfach ausgetauscht werden kann. Darüber hinaus muß die lokale Zentrale als speziell für diesen Zweck vorgesehenes Gerät entwickelt werden, welches insoweit in der Anschaffung und Wartung relativ kostenaufwendig ist.

Der Erfindung liegt deshalb die Aufgabe zugrunde, ein Inventarisierungssystem der eingangs genannten Gattung anzugeben, welches mit konventionellen Datenverarbeitungsgeräten betrieben werden kann, die zu dem vorgesehenen Zweck nicht besonders individualisiert zu werden brauchen und auch jederzeit ohne besondere Umstellungsmaßnahmen austauschbar sind.

Diese Aufgabe wird, ausgehend von einem Inventarisierungssystem gemäß dem Oberbegriff des Anspruchs 1, durch die im kennzeichnenden Teil dieses Anspruchs angegebenen Merkmale gelöst.

Die Erfindung schließt die technische Lehre ein, daß, ausgehend von einem üblichen, insbesondere mit PC-compatiblen Computem ausgestatteten Datennetzwerk, welches bei einer oder mehreren lokalen Station(en) mit einem Empfänger für extern aufzunehmende Signale insbesondere in Form einer Erweiterungskarte oder extern über eine serielle oder parallele Schnittstelle nachgeröstet wird bzw. standardmäßig implementiert wird, sowohl die von einem fest installierten Geber ausgesendete Lokationsinformation als auch die von zu inventarisierenden Gegenständen durch aktive oder passive Kommunikation übermittelten Gegenstands- oder Stationskennungen zu einem gemeinsamen Datensatz zusammengefügt und an eine entfernte Station in einem angeschlossenen Datennetz übermittelt werden kann.

Besonders vorteilhaft ist dabei, daß die Lokationskennung in einem externen Gerät - insbesondere fest mit dem Gebäude oder einem Gebäudeteil verbunden, - an einem vorbestimmten Ort verbleibt. Gerade bei einem passiv abfragbaren Gerät ist eine preisgünstige und robuste Ausführung möglich, so daß die Gefahr eines Versagens gering ist. Entsprechendes gilt für die die Inventarisierungskennungen tragenden Geräte. Der gesamte übrige Teil des Systems ist konventionell gestaltet und braucht auch für die Kennungen nicht besonders individualisiert zu werden. Im übrigen handelt es sich dabei um ein normales Computer- oder Kommunikatonsnetzwerk, welches in Betrieben und Organisationen ohnehin als Teil der üblichen Infrastruktur vorhanden ist. Die gesamte Zusatzinstallation gestaltet sich dementsprechend äußerst preisgünstig - wenn einmal die bisher erhältlichen Systeme zum Vergleich herangezogen werden.

Die genaue Kenntnis der lokalen Zuordnung von Geräten und Systemen ist insbesondere dann wichtig, wenn eine Reparatur oder Veränderung vorzunehmen ist. Da in diesem Fall ein Servicetechniker sich auf den Weg zu dem betreffenden Gerät machen muß, ist es nützlich, wenn dessen Installationsort mindestens bei einer Station eines Netzwerks - nämlich bei der, von der aus sich der Techniker auf den Weg macht - bekannt ist. Gerade bei größeren Netzen kommt es vor, daß aus organisatorischen Gründen ganze Abteilungen mit ihren Geräten und Datenverarbeitungseinrichtungen in andere Gebäude ziehen, ohne daß es den technischen Abteilungen, die für ihre Wartung zuständig sind, bekannt wird.

Bei dem erfindungsgemäßen Inventarisierungssystem mit Mitteln zur automatischen gemeinsamen Erfassung und Pflege der Lokationsdaten von Geräten bzw. Objekten und Datenverarbeitungssystemen werden Lokationsdaten einerseits und Geräte- bzw. Systemdaten andererseits mit dem Ziel verknüpft, mit der so erhaltenen Inventarisierungskennung einen genauen Überblick über die Standorte und den Standortwechsel beliebiger Objekte bzw. Datenverarbeitungssysteme Auskunft zu erhalten und diese Informationen für weitere Verarbeitungszwecke mit Mitteln der Datenverarbeitung bereitzustellen. Die Objekte bzw. Systeme müssen dabei nicht unbedingt Funktionen zur Datenverarbeitung besitzen - es sind insbesondere auch Kommunikationssysteme brauchbar. Damit eignet sich das erfindungsgemäße System in besonderem Maße für jede Art von Inventarisierungsaufgaben, bei denen datenverarbeitungstechnisch nicht auswertbare Informationsträger wie, aufgeklebte Plaketten mit Inventarnummern, durch vom Verfahren auswertbare elektronische Informationsquellen ersetzt werden sollen.

Ersichtlicherweise stellt es einen besonderen Vorteil dar, wenn statische Auswertungen und Bearbeitungen der Inventarisierungsinformationen mit denselben Datenverarbeitungs- oder Kommunikationsgeräten vorgenommen werden können, welche auch die Bereitstellung der Informationen ermöglichten.

Als inventarmäßig zu kennzeichnende Gegenstände, Geräte oder Stationen werden dabei insbesondere alle im Sinne von im Anlagevermögen zu wertende Objekte bezeichnet, für die der Bedarf an Inventarisierungsdaten aus (bilanz-) technischen und/oder büromäßigen Erfordernissen besteht. Auch sicherheitsrelevante Zugriffschutzverfahren können insoweit um den Aspekt der Standortinformation bereichert werden.

Besonders vorteilhaft ist, daß die Lokationskennung in dem Datenverarbeitungssystem mit mindestens einer Gegenstands- oder Systemkennung zu einer auf dem Datennetz zu einer Überwachungsstation zu übertragenden, eine Inventarisierungskennung bildenden Dateneinheit verbunden wird, welche sich von dem Datenformat der darin enthaltenen Lokationskennung - wenn man diese in Alleinstellung betrachtet - unterscheidet, so daß diese Dateneinheit nicht mehr in anderer Weise mit einer weiteren Gegenstands- und/oder Stationskennung zu einer gültigen Inventarisierungskennung verbunden werden kann. Auf diese Weise ist sichergestellt, daß Lokationsdaten ausschließlich an ihrem Ursprungsort verwendet werden können und somit keine Fehler bei der Übertragung oder Zusammensetzung in dem Sinne entstehen können, daß Gegenstands- oder Stationskennungen mit Lokationsdaten an einem anderen Ort zusammengefügt werden als demjenigen, der der Lokationkennung als Information zugeordnet ist.

Weiterhin können in günstiger Weise Mittel zur drahtlosen Übertragung einer Lokationskennung von einem fest mit einem Gebäudeteil verbundenen Geber vorgesehen sein, welcher aus einem Speicher für die Lokationskennung und einem HF-Sender besteht, der zur Übertragung der jeweiligen Kennung an den HF-Empfänger ausgestaltet ist.

Derartige Sender können unauffällig angebracht und in der Gebäudeinstallation verborgen werden, so daß sie vor Angriffen oder Veränderungen sicher sind.

Entsprechend kann der Geber für die Gegenstands- oder Stationskennung mit Gegenständen verbunden werden. Sie bestehen ebenfalls aus einem HF-Sender, welcher zur Übertragung der jeweiligen Kennung an den HF-Empfänger ausgestaltet ist.

Dabei kann insbesondere die Lokations- bzw. die Gegenstandskennung durch einen elektrischen Parameter mindestens eines elektrischen oder elektronischen Bauelements bestimmt werden.

Bei einer anderen vorteilhaften Weiterbildung des erfindungsgemäßen Inventarisierungssystem handelt es sich bei dem HF-Sender um ein passives System, das seine Energie von einer weiteren HF-Quelle bezieht, welche insbesondere beim Empfänger angeordnet ist. Auf diese Weise kann auf eine regelmäßige Wartung und einen Austausch von Batterien bei den Gebern verzichtet werden.

Wenn es sich bei dem erfindungsgemäßen System um ein Kommunikationsnetz handelt, wird vorteilhaft ein ISDN-Netz vorgesehen, da es bei diesem auf einfache Weise möglich ist, zusätzliche Informationen in digitaler Form, insbesondere im D-Kanal zu übertragen.

Weiterhin ist es günstig, wenn das Kommunikations- oder Datennetz einem Energienetz nach dem Prinzip "Data-on-Powerline" überlagert ist. Hierbei sind dann an den Endgeräten die entsprechenden Filter zur Signal-/Energie-Trennung vorzusehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: als bevorzugtes Ausführungsbeispiel der Erfindung ein Computerdatennetz im Zusammenwirken mit dem erfindungsgemäßen Inventarisierungssystem, welches mit den Maßnahmen gemäß der Erfindung versehen ist sowie
- Figur 2: ein Blockschaltbild eines Details des Ausführungsbeispiels gemäß Figur 1 mit den die Erfindung betreffenden Teilen eines Datenverarbeitungssystems mit Netzwerkanschluß.

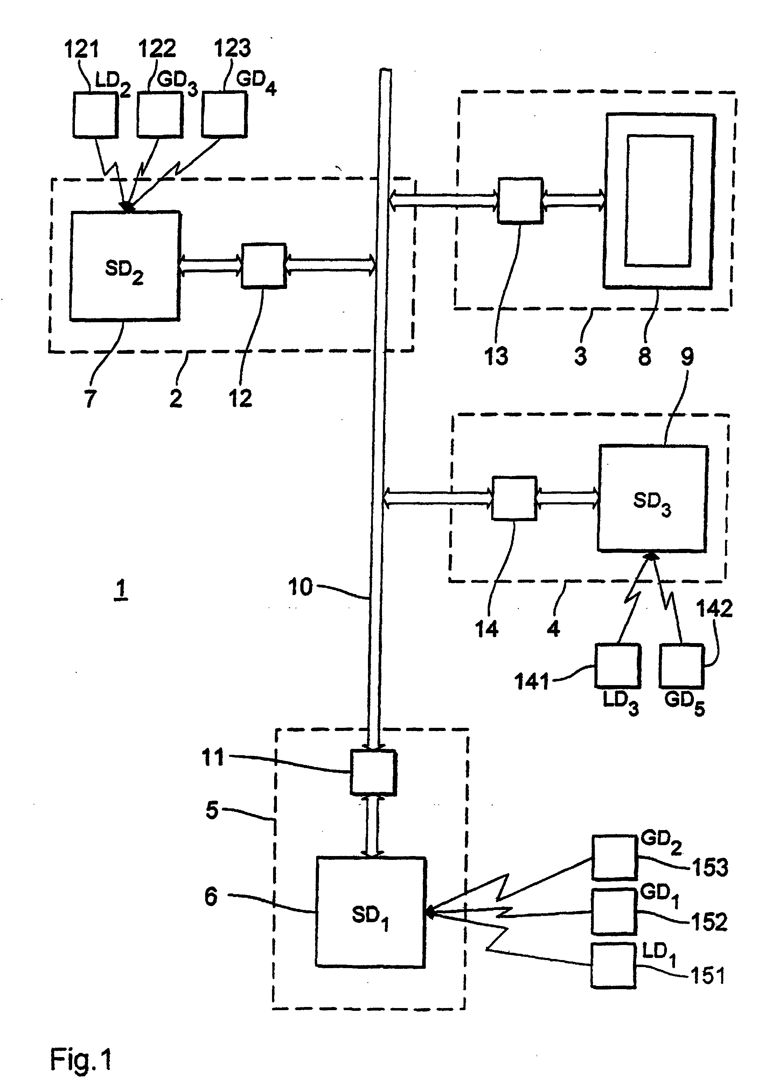

Bei dem in Figur 1 dargestellten Computemetz 1 sind an unterschiedlichen Aufstellorten 2 bis 5 verschiedene Datenverarbeitungssysteme 6 bis 9 räumlich getrennt voneinander vorgesehen.

Die Datenverarbeitungssysteme 6 bis 9, welche vorzugsweise Arbeits- bzw. Serverstationen bilden, sind über als Bodentanks ausgestaltete Datennetzanschlüsse 11 bis 14 mit einem Datennetz 10 verbunden, über das der Datenaustausch erfolgt. In den Datennetzanschlüssen 11 bis 14 sind weiter unten dargestellte Lokationsgeber als Geber für eine eindeutige Lokationskennung vorgesehen, welche jeweils eine Information über den Aufstellungsort der Station beinhaltet. Die Datenverarbeitungsstation 8 ist dabei besonders als zentrale Überwachungsstation für die Inventarisierungsdaten ausgestaltet. Hier kann die Auflistung, derAusdruck und die Weiterverarbeitung der Inventarisierungsdaten, beispielsweise mit Tabellenkalkulations- oder Datenbankprogrammen, erfolgen.

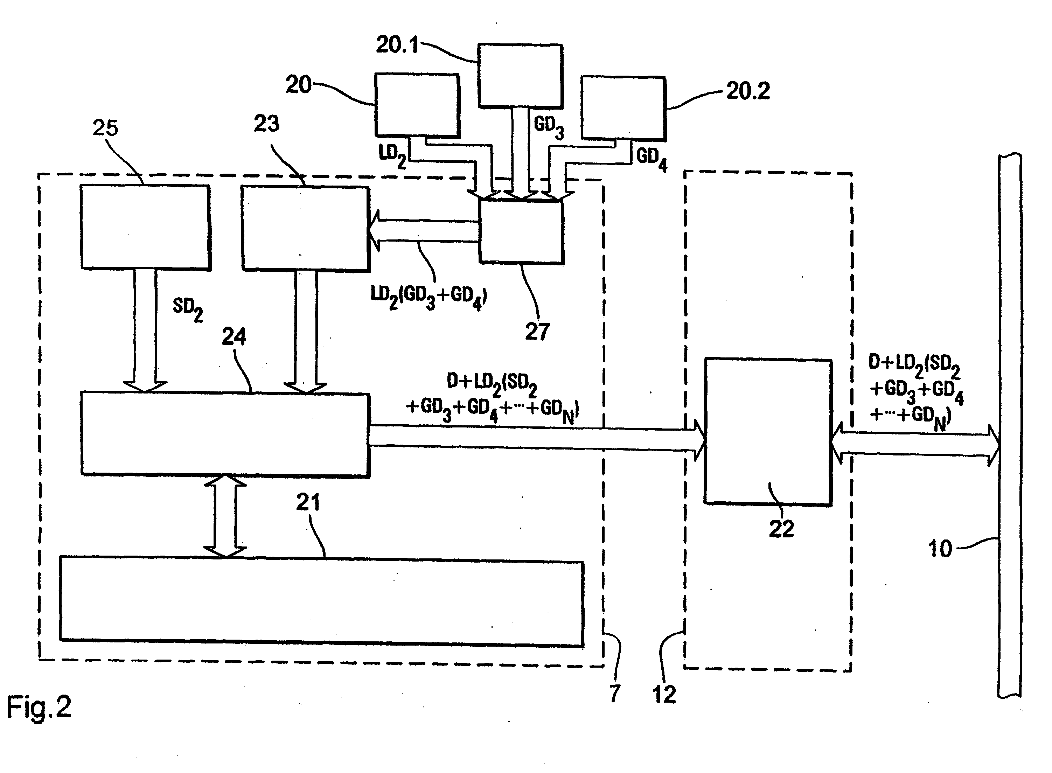

Anstelle des in Figur 1 dargestellten Computerdatennetzes kann auch ein Kommunikationsnetz Verwendung finden, welches mit Mitteln zur digitalen Übertragung von Daten ausgestattet ist. Hierbei handelt es sich vorzugsweise um ein ISDN-Netz. In dem in Figur 2 dargestellten mit den die Erfindung betreffenden Elementen versehenen Ausführungsbeispiel in Blockdarstellung ist eine Datenverarbeitungsstation 7 schematisch wiedergegeben. Diese Station 7 weist neben einem zu einem einzigen Block zusammengefaßten üblichen Prozessorsystem 21, welches die in dem Gehäuse eines PC einschließlich lokaler Peripherie wie Bildschirm, Tastatur und Drucker mit einschlägiger Hard- und Software vorgesehenen Elemente und Baugruppen repräsentieren soll. Mit diesem Prozessorsystem 21 in Verbindung steht eine Netzschnittstelle 22, welche über einen Datennetzanschlußeinheit 12 die Verbindung zu dem Datennetz 10 herstellt. Die Netzschnittstelle 22 wird dabei von dem Prozessorsystem 21 über einen Datenumsetzer 24, der auch die Netzschnittstelle des Prozessorsystems bildet, in der Weise gesteuert, daß eine Übertragung der Daten über das Netz entsprechend den im Netzwerk vorgesehenen Protokollen erfolgt.

Ein Speicher 23 für Lokations- und Gegenstands- bzw. Stationskennungen ist mit einem HF-Empfänger 27 verbunden, um diese Kennungen von in der Nähe befindlichen Gebern 20 bis 20.2, die mit einem entsprechenden HF-Sender versehen sind, über den HF-Empfänger aufzunehmen. Die verwendeten HF-Sender sind passiv, d.h. durch Funkwellen abfragbar, welche entweder in ihrem Resonanzverhalten verändert werden oder nach Gleichrichtung und erneuter Modulation im HF-Senderteil dem Empfänger übermittelt werden.

Die Geber sind entweder mit einem Gebäudeteil oder aber zu inventarisierenden Gegenständen fest verbunden. Der mit Gebäudeteil verbundene Lokationsgeber 20 weist einen - nicht dargestellten - Speicher für die Lokationskennung LD₂ auf, welche einer HF von in einem für derartige Zwecke freigegebenen Frequenzband - vorzugsweise 430 MHz - aufmoduliert wird. Die beiden Geber für Gegenstands- bzw. Stationskennungen 20.1 und 20.2 sind - sowohl unter sich als auch mit dem Lokationsgeber 20 - gleichartig aufgebaut - unterscheiden sich aber in dem ausgesendeten Code. Sie senden Gegenstandskennungen GD₃ bzw. GD₄ aus. Die Geber sind in kleiner Baugröße herstellbar und können Geräten oder Gebäudeteilen unauffällig hinzugefügt werden. Die Umstellung von dem einen zu dem anderen Typ ist durch einfaches Umschalten oder Hinzufügen eines die auszusendende Kennung bestimmenden Bauelements möglich. Es ist dabei jedoch von Bedeutung, daß die Kennungen für Lokation einerseits und Gegenstände andererseits unterschiedlichen Datenmengen angehören, welche insgesamt keine Dupletten aufweisen können und somit sowohl unter sich als auch gegenseitig nicht kompatibel sind. Dasselbe gilt für die aus jeweils einer Lokationskennung und mindestens einer Gegenstandskennung zusammengesetzten Inventarisierungskennung. Da diese also verschiedenen Datenmengen angehören, ist sichergestellt, daß nicht eine Inventarisierungskennung oder deren Gegenstands bzw. Lokationsanteil mit einer neuen Lokations- bzw. Gegenstandskennung zusammengefügt werden kann, was das Vorhandensein eines falschen Gegenstands an einem falschen Standort vortäuschen würde. Die Verfügbarkeit der Lokationskennung in ihrer von dem Geber ausgesendeten oder einer davon abgeleiteten Form ist auf die Umgebung des Gebers beschränkt. Der Transport auf dem Daten- oder Kommunikationsnetz erfolgt nur in einem Datenformat, das sowohl die Lokations- als auch die Gegenstandskennung enthält.

Der Speicher für die empfangene Lokationskennung LD₂ und die Gegenstandskennungen GD₃ und GD₄ werden an einen Umsetzer 24 weitergeleitet, welcher diese Daten erneut speichert. Die Lokationskennung wird weiterhin in Zuordnung zu der einer aus einem Geber 25 für eine der Station zugeordneten Stationskennung SD₂ zusammen mit den anderen Kennungen in einem geeigneten Protokoll zu vorbestimmten Zeiten oder auf Anforderung über die nächstgelegene Datennetzanschlußeinheit 22 hinaus an andere im Datennetz 10 befindliche Datenverarbeitungssysteme - und dabei insbesondere an eine entfernte Überwachungsstation - übermittelt.

Die zusammengefaßten oder in entsprechender Zuordnung übertragenen Lokationsund Gegenstands bzw. Datenverarbeitungsstationsdaten (LD+SD) werden in einem solchen Protokoll zusammengefaßt, welches zur Übertragung von Daten auf dem Netz geeignet ist. Die übertragenen zusammengefaßten Lokations- und Gegenstandsdaten unterscheiden sich insoweit von den reinen Lokations- bzw. Datenverarbeitungsstationsdaten LD und SD in Alleinstellung.

Der Umsetzer 24 der Datenverarbeitungsstation 7 steht mit dem Prozessor teil 21 in Verbindung, welcher die beschriebene Datenkommunikation steuert.

Die erfindungsgemäße Lösung besteht aus einem System mit drei logischen Funktionseinheiten:
a) einem Geber für die Lokationsdaten welche ausschließlich in der Umgebung dieses lokalen Gebers verfügbar sind und nur von dem mit der Zusammenfügung dieser Kennung mit den weiteren Gegenstands- oder Stationskennungen betrauten Datenverarbeitungs- oder Kommunikationssystem verarbeitet werden. Diese Daten können damit nicht unmittelbar zu anderen Datenverarbeitungs- oder Kommunikationssystemen gelangen, welche an räumlich entfernten und somit "fremden" Aufstellungsorten stehen. Hierzu können separate Verbindungsleitungen oder Kommunikationskanäle zwischen Lokationsgeber und Datenverarbeitungssystem oder aber geeignete Filter bzw. Schalter verwendet werden, welche synchron zur Abgabe der Lokationsinformation die Datenverbindung zum Gesamtnetz unterbrechen. Lediglich die Verbindung zum jeweiligen Datenverarbeitungssystem bleibt insoweit bestehen. Der Lokationsgeber muß dabei am Aufstellungsort, beispielsweise mittels einer "Bodentankeinheit", fest verankert sein.
b) einem Geber für eine Gegenstands- oder Stationskennung
c) einer Misch- und Umsetzeinheit für Lokationsdaten und Gegenstandsdaten, welche in der verarbeitenden Station angeordnet ist. Hier werden die Informationen aus a) und b) zusammengeführt und für die Weiterverarbeitung als Dateneinheit bereitgestellt. Dabei erhalten sie ein Datenformat, welches ein Passieren der aus a) und b) gemeinsam gebildeten Information in Richtung Datennetz gestattet.

Die jeweiligen Datenmengen sind aber so ausgestaltet, daß sowohl die Lokationskennungen als auch die Gegenstands- und Inventarisierungskennungen unterschiedlichen Datenmengen angehören, so daß die Lokationskennung einer entfernten Station nicht mit der Kennung eines Gegenstands zusammen auftreten kann, der nicht seinen Standort bei dem Geber der Lokationskennung hat. Insoweit bildet also die Selektion des Datenformats - und gegebenenfalls eine zusätzliche Codierung und Filterung der Daten eine Sicherheit gegen Fehlsteuerungen und - zuordnungen.

Die genannten Bedingungen sind auf ohne weiteres auf herkömmlichen Datenverarbeitungs- und Kommunikationssystemen einzuhalten, so daß das erfindungsgemäße System üblichen Datenverarbeitungs- und Kommunikationsanlagen auf einfache Weise zugefügt werden kann.

Als Lokationsgeber kommen insbesondere auch Sender in Frage, die über Funk-, Infrarot- oder Schallwellen die Lokationsdaten an das Datenverarbeitungssystem übertragen. Die Lokationsgeber werden gegeneinander abgeschirmt, so daß Mehrfachzuordnungen eines Datenverarbeitungssystem zu mehreren Lokationsgebem nicht möglich sind.

Wenn das Kommunikations- oder Datennetz einem Energienetz nach dem Prinzip "Data-on-Powerline" überlagert ist, sind an den Endgeräten die entsprechenden Filter zur Signal-/Energie-Trennung vorgesehen - was in den Figuren nicht im einzelnen dargestellt ist.

Die beanspruchte Erfindung beschränkt sich in ihrer Ausführung nicht auf die vorstehend angegebenen bevorzugten Ausführungsbeispiele. Vielmehr ist eine Anzahl von Varianten möglich, welche von der beanspruchten Lösung auch bei grundsätzlich anders gearteten Ausführungen Gebrauch macht.

## Patentansprüche

1. Inventarisierungssystem für Gegenstände, welche jeweils eine individuelle, abfragbare Gegenstands- oder Stationskennung aufweisen, **gekennzeichnet durch** ein Datenverarbeitungs- bzw. Kommunikationsnetz (10) mit mindestens einem für allgemeine Datenverarbeitungs- bzw. Kommunikationszwecke vorgesehenen Datenverarbeitungs- bzw. Kommunikationssystem (6, 7, 9) in Form einer Arbeitsund/oder Serverstation bzw. einem Kommunikationsendgerät, welches zur Datenverarbeitung oder zum Austausch von Daten auf dem Datenverarbeitungs- bzw. Kommunikationsnetz ausgestattet ist,
einen Geber (20) für eine Lokationskennung, die sich von anderen Lokationskennungen unterscheidet, der mit seinem Aufstellungsort fest verbundenen ist,
einen Aufnehmer (23, 25, 27) in dem Datenverarbeitungs-bzw. Kommunikationssystem sowohl für diese Lokationskennung als auch für die Gegenstands- oder Stationskennung sowie
einen Umsetzer (24), welcher die Lokationskennung zusammen mit oder in Zuordnung zu mindestens einer Gegenstands- oder Stationskennung in ein zur Übertragung über das Datenverarbeitungs bzw. Kommunikationsnetz geeignetes Datenformat als Inventarisierungskennung umsetzt und an das Datenverarbeitungs-bzw. Kommunikationsnetz zur Übertragung an eine entfernte Überwachungsstation (8) abgibt.

2. Inventarisierungssystem nach Anspruch 1, **dadurch gekennzeichnet, daß** die Lokationskennung in dem Datenverarbeitungssystem mit mindestens einer Gegenstands- und/oder Stationskennung zu einer auf dem Datennetz zu einer Überwachungsstation zu übertragenden, eine Inventarisierungskennung bildenden Dateneinheit verbunden wird, welche sich von dem Datenformat der darin enthaltenen Lokationskennung allein unterscheidet, so daß diese Dateneinheit nicht mehr In anderer Weise mit einer weiteren Gegenstands- und/oder Stationskennung zu einer gültigen Inventarisierungskennung verbunden werden kann.

3. Inventarisierungssystem nach Anspruch 1 oder 2, **dadurch gekennzeichnet, daß** sämtliche Lokations-, Gegenstands- bzw. Stationskennungen und Inventarisierungskennungen unterschiedlichen Datenmengen angehören, welche auch gagenseitig keine Dupletten aufweisen.

4. Inventarisierungssystem nach einem der vorangehenden Ansprüche, **dadurch gekennzeichnet**, daßdie Gegenstands- oder Stationskennung drahtlos abfragbar ist.

5. Inventarisierungssystem nach einem der vorhergehenden Ansprüche, **gekennzeichnet durch** Mittel zur drahtlosen Übertragung einer Lokationskennung von einem mit einem Gebäudeteil fest verbundenen Geber, welcher aus einem Speicher für die Lokationskennung und einem HF-Sender besteht, der zur Übertragung der jeweiligen Kennung an den HF-Empfänger ausgestaltet ist.

6. Inventarisierungssystem nach Anspruch 1 oder 2, **gekennzeichnet durch** Mittel zur drahtlosen Übertragung einer Kennung von einem mit einem Gegenstand und/oder einer Datenverarbeitungsstation fest verbundenen Geber für die Gegenstands- bzw. Stationskennung, welcher aus einem Speicher für die Gegenstands- bzw. Stationskennung und einem HF-Sender besteht, der zur Übertragung der jeweiligen Kennung an den HF-Empfänger ausgestaltet ist.

7. Inventarisierungssystem nach einem der Ansprüche 3 bis 5, **dadurch gekennzeichnet, daß** die Lokations-, Gegenstands- oder Stationskennung durch einen elektrischen Parameter mindestens eines elektrischen oder elektronischen Bauelements bestimmt wird.

8. Inventarisierungssystem nach Anspruch 1 oder 2, **dadurch gekennzeichnet, daß** der Geber für die Lokationskennung einerseits und der Geber für die Gegenstands- oder Stationskennung andererseits unter sich technisch gleichartig ausgestaltet sind und durch entsprechende Umschaltmittel und/oder durch Hinzufügen eines die auszusendende Kennung bestimmenden Bauelements für den einen oder den anderen Zweck einsetzbar sind.

9. Inventarisierungssystem nach einem der vorangehenden Ansprüche, **dadurch gekennzeichnet, daß** es sich bei dem HF-Sender um ein passives System handelt, das seine Energie von einer weiteren HF-Quelle bezieht, welche insbesondere beim Empfänger angeordnet ist.

10. Inventarisierungssystem nach einem der vorhergehenden Ansprüche, **dadurch gekennzeichnet, daß** es sich bei dem Kommunikationsnetz um ein ISDN-Netz oder ein Data-on-Powerline-Netz handelt.

11. Inventarisierungssystem nach Anspruch 10, **dadurch gekennzeichnet, daß** Filter zur Trennung von Inventarisierungdaten von Kommunikations daten und/oder der Versorgungsspannung des Energienetzes vorgesehen sind.

## Claims

1. An inventory system for articles which each have a respective individual, interrogatable article or station identification, **characterized by** a data processing or communication network (10) having at least one data processing or communication system (6,7,9) provided for general data processing or communication purposes, in the form of a work and/or server station or a communication terminal respectively, which is adapted for data processing or for the exchange of data on the data processing or communication network,
a transmitting assembly (20) for a local identification which differs from other location identifications, the transmitting assembly being fixedly connected to its location of installation,
a receiving means (23,25,27) in the data processing or communication system both for said location identification and also for the article or station idendification, and
a converter (24) which converts the location identification together with or in association with at least one article or station identification into a data format suited for transmission by way of the data processing or communication network, as an inventory identification, and delivers same to the data processing communication network for transmission to a remote monitoring station (8).

2. An inventory system as set forth in claim 1 **characterized in that** the location identification is connected in the data processing system to at least one article and/or station identification to form a data unit which is to be transmitted.on the data network to a monitoring station and which forms an inventory identification, which data unit differs from the data format of the location identification contained therein alone so that said data unit can no longer be connected in another manner to a further article and/or station identification to form a valid inventory identification.

3. An inventory system as set forth in claim 1 or claim 2 **characterized in that** all location, article and station identifications and inventory identifications belong to different data quantities which also have no doublets in mutual relationship.

4. An inventory system as set forth in one of the preceding claims **characterised in that** the article or station identification can be wirelessly interrogated.

5. An inventory system as set forth in one of the preceding claims **characterized by** means for the wireless transmission of an identification from a transmitting assembly which is fixedly connected to a part of a building and which comprises a store for the location identification and an HF-transmitter which is adapted to transmit the respective identification to the HF-receiver.

6. An inventory system as set forth in claim 1 or claim 2 **characterized by** means for the wireless transmission of an identification from a transmitting assembly for the article or station identification, which is connected to an article and/or a data processing station and which comprises a store for the article or station identification and an HF-transmitter which is adapted to transmit the respective identification to the HF-receiver.

7. An inventory system as set forth in of claims 3 through 5 **characterized in that** the location, article or station identification is defined by an electrical parameter of at least one electrical or electronic component.

8. An inventory system as set forth in claim 1 or claim 2 **characterized in that** the transmitting assembly for the location identification on the one hand and the transmitting assembly for the article or station identification on the other hand are of technically similar nature and can be used for the one purpose or the other by virtue of suitable change-over switching means and/or by the addition of a component which determines the identification to be emitted.

9. An inventory system as set forth in one of the preceding claims **characterized in that** the HF-transmitter entails a passive system which takes its power from a further HF-source which in particular is arranged at the receiver.

10. An inventory system as set forth in one of the preceding claims **characterized in that** the communication network is an ISDN arrangement or a data-on-powerline network.

11. An inventory system as set forth in claim 10 **characterized in that** there are provided filters for the separation of inventory data from communication data and /or the supply voltage of the power network.

## Revendications

1. Système d'inventoriage pour des objets qui présentent chacun un critère d'objet ou de position individuel et interrogeable, **caractérisé par** un réseau de traitement des données ou de communication (10) avec au moins un système de traitement des données ou de communication (6, 7, 9) prévu dans des buts généraux de traitement des données ou de communication sous forme d'une station de travail et/ou d'un serveur ou avec un terminal de communication, lequel est conçu pour le traitement des données ou pour l'échange de données sur le réseau de traitement des données ou de communication,
par un transmetteur (20) pour un critère de localisation qui se différencie d'autres critères de localisation, lequel transmetteur est fixement lié à son emplacement,
par un capteur (23, *25,* 27) dans le système de traitement des données ou de communication aussi bien pour le critère de localisation que pour le critère d'objet ou de position,
ainsi qu'un convertisseur (24) qui convertit en un critère d'inventoriage le critère de localisation, conjointement avec ou en association avec au moins un critère d'objet ou de position, dans un format de données adapté à la transmission sur le réseau de traitement des données ou de communication et le transmet au réseau de traitement des données ou de communication pour être transféré à un poste de surveillance à distance (8).

2. Système d'inventoriage selon la revendication 1, **caractérisé en ce que** le critère de localisation dans le système de traitement des données est relié à au moins un critère d'objet et/ou de position pour former une unité de données qu'on doit transférer à un poste de surveillance sur le réseau de données, qui forme un critère d'inventoriage et qui se distingue seul du format de données du critère de localisation qui y est contenu, de sorte que cette unité de données ne peut plus être liée d'une autre manière à un autre critère d'objet et/ou de position pour former un critère d'inventoriage valide.

3. Système d'inventoriage selon la revendication 1 ou 2, **caractérisé en ce que** tous les critères de localisation, d'objet ou de position et les critères d'inventoriage font partie de différents flots de données qui par ailleurs ne présentent pas de doublons les uns par rapport aux autres.

4. Système d'inventoriage selon l'une des revendications précédentes, **caractérisé en ce que** l'on peut interroger sans fil le critère d'objet ou de position.

5. Système d'inventoriage selon l'une des revendications précédentes, **caractérisé par** des moyens de transfert sans fil d'un critère de localisation depuis un transmetteur qui est solidement lié à une partie de bâtiment et qui se compose d'une mémoire pour le critère de localisation et d'un émetteur à hautes fréquences qui est conçu pour transférer le critère en question au récepteur à hautes fréquences.

6. Système d'inventoriage selon la revendication 1 ou 2, **caractérisé par** des moyens de transfert sans fil d'un critère depuis un transmetteur - pour le critère d'objet ou de position - qui est solidement lié à un objet et/ou à un poste de traitement de données et qui se compose d'une mémoire pour le critère d'objet ou de position et d'un émetteur à hautes fréquences qui est conçu pour transférer le critère en question au récepteur à hautes fréquences.

7. Système d'inventoriage selon l'une des revendications 3 à 5, **caractérisé en ce que** le critère de localisation, d'objet ou de position est établi par un paramètre électrique d'au moins un composant électrique ou électronique.

8. Système d'inventoriage selon la revendication 1 ou 2, **caractérisé en ce que** le transmetteur pour le critère de localisation d'une part et le transmetteur pour le critère d'objet ou de position d'autre part sont techniquement conçus de façon équivalente et peuvent être utilisés dans l'un ou dans l'autre but par des moyens de basculement correspondants et/ou par ajout d'un composant qui détermine le critère à envoyer.

9. Système d'inventoriage selon l'une des revendications précédentes, **caractérisé en ce que**, pour ce qui est de l'émetteur à hautes fréquences, il s'agit d'un système passif qui tire son énergie d'une autre source à hautes fréquences laquelle est disposée en particulier sur le récepteur.

10. Système d'inventoriage selon l'une des revendications précédentes, **caractérisé en ce que**, pour ce qui est du réseau de communication, il s'agit d'un réseau RNIS ou d'un réseau de données sur courant porteur.

11. Système d'inventoriage selon la revendication 10, **caractérisé en ce que** l'on prévoit des filtres pour séparer les données d'inventoriage de celles de communication et/ou de la tension d'alimentation du réseau d'énergie.
